# EUROPEAN PATENT APPLICATION

(11) **EP 4 769 584 A1**
(43) Date of publication of application: **01.07.2026**
(21) Application number: 24874972.3
(22) Date of filing: 04.10.2024
(51) Int. Cl.: H01M 8/04119, B01D 63/06

(54) **FUEL CELL HUMIDIFIER INCLUDING REPLACEABLE UNIT MODULE**

(30) Priority: 06.10.2023 KR 20230133683
(71) Applicant: Kolon Industries, Inc., Seoul 07793 (KR)
(72) Inventor: KIM, In Ho, Seoul 07793 (KR); KIM, Do Woo, Seoul 07793 (KR)
(74) Representative: Vossius & Partner Patentanwälte Rechtsanwälte mbB
(86) International application number: PCT/KR2024/015067
(87) International publication number: WO 2025/075416

(57) **Abstract**

A humidifier for a fuel cell with a replaceable unit module includes a unit module including a module housing in a hexahedral shape and a cartridge mounted on the module housing, the module housing including a first opening in each of a top surface, a bottom surface, a front surface, and a rear surface and the cartridge including a humidification membrane therein, and an outer housing mounted to enable one or more unit modules to be assembled therein.

## Description

### Technical Field

The present disclosure relates to a fuel cell humidifier with a replaceable unit module, and more particularly, to a fuel cell humidifier with a replaceable unit module, wherein the fuel cell humidifier is manufactured by manufacturing a unit module including a plurality of cartridges and assembling a plurality of such unit modules to an outer housing, thereby facilitating cartridge replacement.

### Background Art

Fuel cells refer to power-generating batteries that produce electricity by combining hydrogen with oxygen. Unlike general chemical cells such as batteries, storage batteries, etc., fuel cells may continuously produce electricity as long as hydrogen and oxygen are supplied, and are twice as efficient as internal combustion engines because there is no heat loss.

A fuel cell system includes a stack that is an assembly of unit fuel cells each including an air electrode and a fuel electrode to generate electricity, an air supply device for supplying air to the air electrodes of the fuel cells, and a hydrogen supply device for supplying hydrogen to the fuel electrodes of the fuel cells.

A polymer electrolyte membrane fuel cell in the fuel cell system requires adequate moisture for an ion exchange membrane within a membrane-electrode assembly (MEA) to function properly. To this end, the air supply device of the fuel cell system includes a humidifier to humidify the air supplied to the fuel cell.

The humidifier uses moisture from a high-temperature, humid exhaust gas discharged from the air electrode of the fuel cell to humidify a dry gas supplied through an air compressor of the air supply device, and then supplies the humidified air to the air electrode of the fuel cell.

The humidifier for the fuel cell employs a membrane humidification method. Such a humidifier using the membrane humidification method utilizes a gas-to-gas moisture exchange method between a high-temperature, high-humidity exhaust gas discharged from the air electrode of the fuel cell and the dry gas supplied via the air compressor to perform membrane humidification.

The humidifier for the fuel cell may include a cartridge in which a humidifying membrane including a hollow fiber membrane is arranged. The dry gas passes through the hollow fiber membrane from a side of the cartridge to the other, and an opening (window) is provided in a side surface of the cartridge so as to be open to the outside.

Exhaust gas flows into the cartridge through the opening of the cartridge, and the exhaust gas flowing into the cartridge undergoes moisture exchange with the dry gas penetrating the hollow fiber membrane through the hollow fiber membrane.

However, conventional cartridge-based fuel cell humidifiers have issues as described below. A housing of a fuel cell humidifier may include a plurality of cartridges, and the number of cartridges included in the housing may be changed according to the amount of humidified air to be supplied to the fuel cell.

As the cartridge included in the fuel cell humidifier may be limited in size to maximize the efficiency of a humidification membrane, a large number of cartridges need to be arranged into the fuel cell humidifier to manufacture a large-volume fuel cell humidifier. Moreover, the type of cartridges provided in the fuel cell humidifier varies depending on a specific design, making it difficult to efficiently mass-produce cartridges.

Furthermore, the conventional cartridge-based fuel cell humidifiers make it difficult to replace the cartridge when the humidification membrane inside the cartridge is damaged. The humidification membrane inside the cartridge may be damaged during use of the fuel cell humidifier. In this case, the cartridge needs to be replaced.

However, the conventional cartridge-based fuel cell humidifiers make it difficult to replace cartridges with damaged humidification membranes because the cartridge and housing are formed integrally with each other.

### Disclosure of Invention

### Technical Problem

To solve the foregoing problems, the present disclosure relates to a fuel cell humidifier with a replaceable unit module, wherein the fuel cell humidifier is manufactured by manufacturing a unit module including a plurality of cartridges and assembling a plurality of unit modules to an outer housing, thereby facilitating cartridge replacement.

### Solution to Problem

According to an aspect of the present disclosure, a humidifier for a fuel cell with a replaceable unit module includes a unit module including a module housing in a hexahedral shape and a cartridge mounted on the module housing, the module housing having a first opening in each of a top surface, a bottom surface, a front surface, and a rear surface and the cartridge including a humidification membrane therein, and an outer housing mounted to enable one or more unit modules to be assembled therein.

In the fuel cell humidifier with the replaceable unit module according to the present disclosure, any one of first openings in one unit module mounted on the outer housing may communicate with any one of first openings in another unit module.

In the of the fuel cell humidifier with the replaceable unit module according to the present disclosure, the outer housing may include an exhaust gas inlet through which exhaust gas discharged from a fuel cell stack enters and an exhaust gas outlet through which the exhaust gas is discharged.

In the fuel cell humidifier with the replaceable unit module according to the present disclosure, the outer housing may include an inner frame that partitions an internal space of the outer housing.

In the fuel cell humidifier with the replaceable unit module according to the present disclosure, the inner frame may include a second opening open to outside, and when the unit module is mounted on the outer housing, any one of first openings in the unit module may communicate with the second opening.

In the fuel cell humidifier with the replaceable unit module according to the present disclosure, the module housing of the unit module may include a first support which is provided with a through hole in which the cartridge is mounted and which is installed in a middle portion of the module housing, and the first opening provided in each of a top surface, a bottom surface, a front surface, and a rear surface of the module housing may be divided based on the first support.

In the fuel cell humidifier with the replaceable unit module according to the present disclosure, the inner frame may include a second opening open to outside and a second support closed to the outside, and the second opening in the inner frame may be divided based on the second support.

In the fuel cell humidifier with the replaceable unit module according to the present disclosure, when the unit module is mounted on the outer housing, any one of first openings in the unit module may communicate with the second opening.

In the fuel cell humidifier with the replaceable unit module according to the present disclosure, the outer housing or inner frame may be provided with a sliding rail for moving the unit module.

In the fuel cell humidifier with the replaceable unit module according to the present disclosure, a sealing member may be provided between the unit module and the inner frame of the outer housing.

In the fuel cell humidifier with the replaceable unit module according to the present disclosure, a sealing member is provided between the unit module and the outer housing.

In the fuel cell humidifier with the replaceable unit module according to the present disclosure, when the cartridge in a pillar shape is fixed to a side surface and another side surface of the module housing, a sealing member may be provided between the cartridge and the module housing.

### Advantageous Effects of Invention

The present disclosure relates to a fuel cell humidifier with a replaceable unit module in which a unit module including a plurality of cartridges is manufactured and a plurality of unit modules are assembled to an outer housing to manufacture the fuel cell humidifier, facilitating cartridge replacement.

The present disclosure enables replacement of unit modules during the use of a fuel cell humidifier, which allows all or some of cartridges to be replaced and used.

According to the present disclosure, a unit module including a plurality of cartridges is manufactured and a plurality of unit modules are assembled to an outer housing, thereby manufacturing a large-volume fuel cell humidifier.

Moreover, according to the present disclosure, a unit module including a plurality of cartridges is manufactured and a plurality of unit modules are assembled to an outer housing, thereby facilitating manufacturing of a fuel cell humidifier.

### Brief Description of Drawings

FIG. 1 is a view showing a unit module of a fuel cell humidifier according to an embodiment of the present disclosure.
FIG. 2 is a side view of FIG. 1.
FIG. 3 is a view showing a fuel cell humidifier manufactured as a plurality of unit modules are mounted on an outer housing, according to an embodiment of the present disclosure.
FIG. 4 is a side view of FIG. 3.
FIG. 5 is a view showing the outer housing and inner frame according to an embodiment of the present disclosure.
FIG. 6 is a view showing that sliding rails are provided on the outer housing and the inner frame according to an embodiment of the present disclosure.

### Mode for the Invention

The present specification clearly defines the scope of the present disclosure, describes the principles of the present disclosure, and discloses embodiments to allow those of ordinary skill in the art to carry out the present disclosure. The disclosed embodiments may be implemented in various forms.

The term "include", "may include", or the like used in various embodiments of the present disclosure is to indicate the presence of functions, operations, elements, etc., disclosed therein, and does not preclude the presence or addition of one or more functions, operations, elements, etc. Moreover, it should be understood that the term "include", "have", or the like used in various embodiments of the present disclosure is to indicate the presence of features, numbers, steps, operations, elements, parts, or a combination thereof described in the specifications, and does not preclude the presence or addition of one or more other features, numbers, steps, operations, elements, parts, or a combination thereof.

When an element is referred to as being "connected, coupled" to or by any other element, it should be understood that the element may be directly connected or coupled by the other element, but another new element may also be interposed between the element and the other element. Contrarily, when an element is referred to as being "directly connected" or "directly coupled" to or by any other element, it should be understood that there is no new another element between the element and the other element.

Terms such as first, second, etc., used in the present specification may be used to describe various components, but the elements should not be limited to those terms. These terms may be used to distinguish one component from another component.

The present disclosure relates to a fuel cell humidifier with a replaceable unit module, and more particularly, to a fuel cell humidifier with a replaceable unit module in which a unit module including a plurality of cartridges is manufactured and a plurality of unit modules are assembled to an outer housing to manufacture the fuel cell humidifier, facilitating cartridge replacement. Hereinafter, preferred embodiments of the present disclosure will be described with reference to the accompanying drawings.

The fuel cell humidifier with the replaceable unit module according to an embodiment of the present disclosure may include a unit module 100 and an outer housing 200.

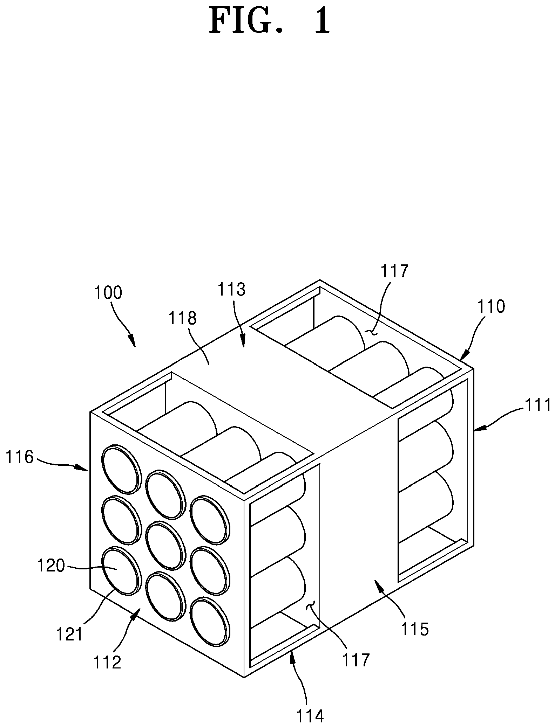

Referring to FIG. 1, the unit module 100 according to an embodiment of the present disclosure includes a module housing 110 and a cartridge 120.

The module housing 110 may have a hexahedral shape and include a first opening 117 on a top surface 113, a bottom surface 114, a front surface 115, and a rear surface 116. The top surface 113 of the module housing 110 may be a surface of an upper portion as shown in FIG. 1, and the bottom surface 114 may be a surface opposite to the top surface 113.

The front surface 115 of the module housing 110 may be a surface of a front portion as shown in FIG. 1, and the rear surface 116 may be a surface opposite to the front surface 115. A side surface 111 of the module housing 110 may be a surface provided on a side of the top surface 113 and a side of the front surface 115 as shown in FIG. 1, and another side surface 112 of the module housing 110 may be a surface provided on another side of the top surface 113 and another side of the front surface 115 as shown in FIG. 1.

The top surface 113, the bottom surface 114, the front surface 115, and the rear surface 116 of the module housing 110 according to an embodiment of the present disclosure may be provided with the first opening 117 that is open to the outside.

The first opening 117 may be a portion open to the outside to allow air to move, and external air may move to an inner side of the module housing 110 through the first opening 117.

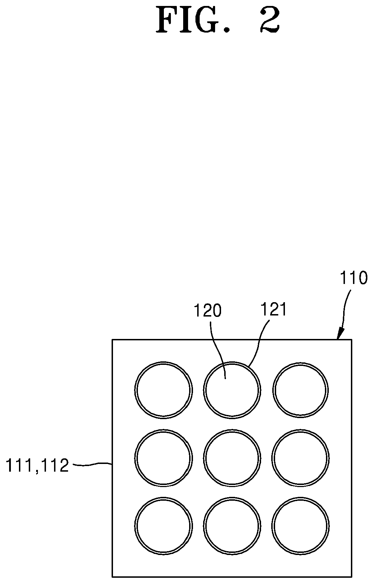

The side surface 111 and the other side surface 112 of the module housing 110 according to an embodiment of the present disclosure may be closed to the outside. Referring to FIGS. 1 and 2, the side and the other side of the cartridge 120 may be fixed to the side surface 111 and the other side surface 112 of the module housing 110, and the side surface 111 and the other side surface 112 of the module housing 110 may be closed to prevent air from moving therethrough.

As the side surface 111 and the other side surface 112 of the module housing 110 are closed, external air may not enter the inner side of the module housing 110 through the side surface 111 and the other side surface 112 of the module housing 110. However, the cartridge 120 may be provided with a hole communicating with the outside and connected to the humidification membrane, and the external air may move to the inner side of the cartridge 120 through the hole.

Referring to FIG. 1, the cartridge 120 may be mounted on the module housing 110 and may be provided with the humidification membrane therein. The cartridge 120 may have a pillar shape and may be fixed to the side surface 111 and the other side surface 112 of the module housing 110.

The cartridge 120 may have a pillar shape and may extend from the side surface 111 to the other side surface 112 of the module housing 110, and the humidification membrane may be provided inside the cartridge 120.

The cartridge 120 according to an embodiment of the present disclosure may have a pillar structure having a cross-section in various shapes. In FIGS. 1 and 2, the cartridge 120 is shown as having a circular cross-section, but is not limited thereto. The cross-section of the cartridge 120 may be formed as a shape having a semicircle attached to opposite ends of a circular, elliptical, polygonal, or square shape.

According to an embodiment of the present disclosure, one or more cartridges 120 may be mounted in the module housing 110, and the plurality of the cartridges 120 may be mounted in the module housing 110.

According to an embodiment of the present disclosure, the cartridge 120 may include an inner case, a humidification membrane, and a fixing member. The inner case may be a case with an internal space, and the humidification membrane may be arranged inside the inner case.

The humidification membrane may be a humidification membrane that exchanges moisture between exhaust gas and dry air, and one or more or a plurality of humidification membranes may be provided inside the inner case. According to an embodiment of the present disclosure, the humidification membrane may include a hollow fiber membrane. However, without being limited thereto, the humidification membrane may be of various types as long as it is capable of exchanging moisture between the exhaust gas and the dry air.

The fixing member may fix the humidification membrane to the inner case on a side thereof, and may include a potting layer. The fixing member may be formed on a side of a plurality of the humidification membranes, and through the fixing member, the side of the plurality of humidification membranes may be fixed to a side of the inner case.

The fixing member may also fix the plurality of humidification membranes to the inner case on another side of the inner case. The fixing member may be formed on the other side of the plurality of the humidification membranes, and through the fixing member, the other side of the plurality of humidification membranes may be fixed to another side of the inner case.

The fixing member is capable of isolating an internal space of the inner case, and by providing the fixing member on the side and the other side of the inner case, dry air may only move through the inner side of the humidification membrane or through a hollow space of the humidification membrane.

According to an embodiment of the present disclosure, high-temperature, high-humidity exhaust gas discharged from a fuel cell stack may flow into the inner side of the module housing 110 through any one or more of the first openings 117 provided on the top surface 113, the bottom surface 114, the front surface 115, and the rear surface 116 of the module housing 110.

According to an embodiment of the present disclosure, dry air may be introduced into the humidification membrane of the cartridge 120 through the side surface 111 or the other side surface 112 of the module housing 110.

As described above, as the side surface 111 and the other side surface 112 of the module housing 110 are closed to the outside, dry air moving to the side surface 111 or the other side surface 112 of the module housing 110 may move toward the humidification membrane provided inside the cartridge 120.

The exhaust gas introduced into the module housing 110 through any one or more of the first openings 117 provided in the top surface 113, the bottom surface 114, the front surface 115, and the rear surface 116 of the module housing 110 may exchange moisture with the dry air passing through the humidification membrane of the cartridge 120, thereby supplying moisture to the dry air.

The exhaust gas, which has supplied moisture to the dry air through the humidification membrane, may be discharged to the outside of the module housing 110 through any one or more of the first openings 117 provided in the top surface 113, the bottom surface 114, the front surface 115, and the rear surface 116 of the module housing 110.

Furthermore, the dry air supplied with moisture from the exhaust gas may be supplied to the stack by passing through the humidification membrane of the cartridge 120 provided on the side surface 111 or the other side surface 112 of the module housing 110.

Referring to FIG. 1, when the cartridge 120 formed in a pillar shape is fixed to the side surface 111 and the other side surface 112 of the module housing 110, a sealing member 121 may be provided between the cartridge 120 and the module housing 110.

The sealing member 121 may be provided to prevent air movement through the side surface 111 and the other side surface 112 of the module housing 110. Specifically, the sealing member 121 may be provided to prevent air from moving into a space between the cartridge 120 and the module housing 110.

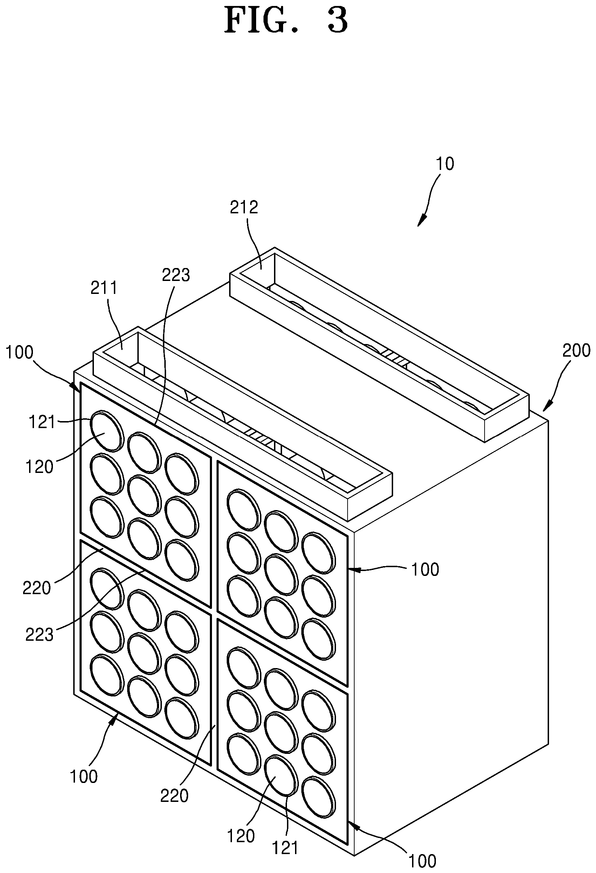

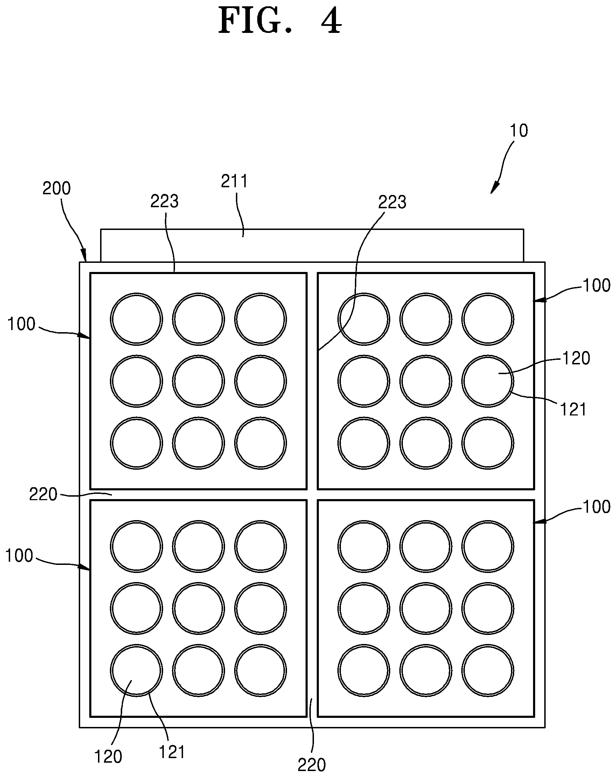

Referring to FIGS. 3 and 4, the outer housing 200 may be a housing on which one or more unit modules 100 may be mounted in such a way to be assembled. The outer housing 200 may be the housing of the fuel cell humidifier 10, and the fuel cell humidifier 10 may be manufactured by assembling the plurality of the unit modules 100 onto the outer housing 200.

The outer housing 200 may be provided with a space for accommodating the plurality of unit modules 100, and the size of the outer housing 200 may change depending on the number of unit modules 100.

The unit module 100 may be mounted on the outer housing 200 such that the cartridge 120 is arranged from a side surface of the outer housing 200 toward another side surface of the outer housing 200.

Referring to FIG. 3, the outer housing 200 may include an exhaust gas inlet 211 into which the exhaust gas discharged from the fuel cell stack flows, and an exhaust gas outlet 212 for discharging the exhaust gas.

The exhaust gas inlet 211 and the exhaust gas outlet 212 may be provided on any one of a top surface, a bottom surface, a front surface, or a rear surface of the outer housing 200. The exhaust gas may enter the outer housing 200 through the exhaust gas inlet 211, and the exhaust gas entering the outer housing 200 may flow into the inner side of the module housing 110 through the first opening 117.

The exhaust gas having undergone moisture exchange within the module housing 110 may pass through the first opening 117 and move to the inner side of the outer housing 200, and the exhaust gas having moved to the inner side of the outer housing 200 may be discharged to the outside through the exhaust gas outlet 212.

According to an embodiment of the present disclosure, any one of the first openings 117 provided in one unit module 100 mounted on the outer housing 200 may communicate with any one of the first openings 117 provided in another unit module 100.

The exhaust gas flowing into the outer housing 200 through the exhaust gas inlet 211 may move to the inner side of one unit module 100 through the first opening 117. The exhaust gas having undergone moisture exchange with dry air in one unit module 100 may move to another unit module 100 to continue the moisture exchange with the dry air.

To this end, any one of the first openings 117 provided in the unit module 100 mounted on the outer housing 200 may communicate with any one of the first openings 117 provided in the other unit module 100.

The exhaust gas having undergone the moisture exchange with the dry air in the unit module 100 may pass through any one of the first openings 117 provided in the unit module 100 and move to any one of the first openings 117 provided in the other unit module 100.

In this manner, as any one of the first openings 117 provided in the unit module 100 communicates with any one of the first openings 117 provided in the other unit module 100, the exhaust gas flowing into the exhaust gas inlet 211 may move into the plurality of unit modules 100. The exhaust gas passing through the plurality of unit modules 100 may be discharged through the exhaust gas outlet 212.

A side surface and the other side surface of the outer housing 200 may be open to the outside, and the dry air may be introduced through the side surface or the other side surface of the outer housing 200. The dry air introduced to the side surface or the other side surface of the outer housing 200 may move to the inner side of the cartridge 120 of the unit module 100.

The dry air flowing into the cartridge 120 may exchange moisture with the exhaust gas through the humidification membrane. The moisture-exchanging dry air may be discharged to the side surface or the other side surface of the outer housing 200 after being discharged outside the cartridge 120 of the unit module 100.

The outer housing 200 may include connection portions provided on the side surface and the other side surface thereof. The connection portions may cover the plurality of the unit modules 100 mounted on the outer housing 200 from the side surface and the other side surface of the outer housing 200. An end cap including a dry air inlet and a dry air outlet may be coupled to the connection portions provided on the side surface and the other side surface of the outer housing 200.

According to an embodiment of the present disclosure, a sealing member may be provided between the outer housing 200 and the connection portions, and the sealing member may prevent air from moving between the outer housing 200 and the connection portions.

Referring to FIGS. 3 and 4, the outer housing 200 may include an inner frame 220 that partitions an internal space of the outer housing 200. The inner frame 220 may partition the internal space of the outer housing 200, thereby enabling the partitioning of a space for mounting the plurality of unit modules 100 via the inner frame 220.

The inner frame 220 may support the plurality of unit modules 100 mounted in the outer housing 200, enabling the plurality of unit modules 100 to be mounted at designated positions within the outer housing 200 via the inner frame 220.

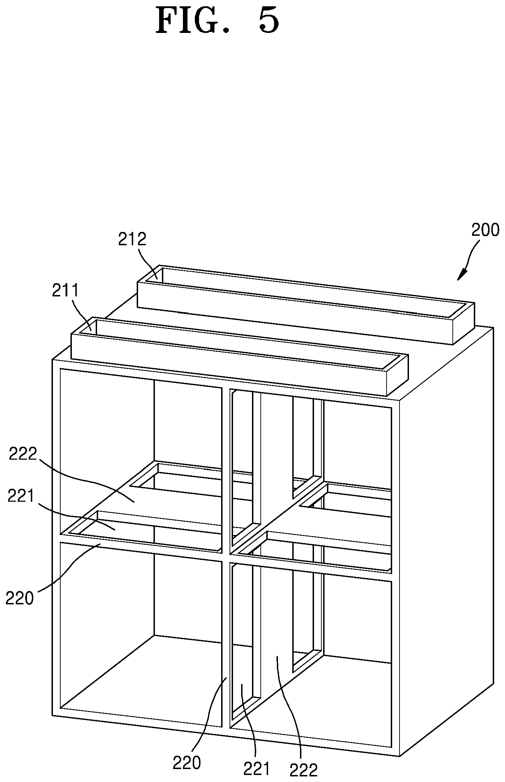

Referring to FIG. 5, the inner frame 220 may be formed in a plate shape and may be provided in the outer housing 200, in which the inner frame 220 may be provided with a second opening 221 open to the outside.

The second opening 221 may be a portion open to the outside to allow air to move, and the second opening 221 may be formed in the inner frame 220 formed in a plate shape. The air may pass through the inner frame 220 via the second opening 221.

According to an embodiment of the present disclosure, when the unit module 100 is mounted on the outer housing 200, any one of the first openings 117 provided in the unit module 100 may communicate with the second opening 221.

The outer housing 200 may include the plurality of unit modules 100 and may have one unit module 100 mounted on a side thereof with respect to the inner frame 220 and another unit module 100 mounted on another side thereof.

When the unit module 100 is mounted on a side with respect to the inner frame 220, the first opening 117 provided in any one of the top surface 113, the bottom surface 114, the front surface 115, or the rear surface 116 of the module housing 110 provided in the unit module 100 may communicate with the second opening 221 of the inner frame 220.

When the unit module 100 is mounted on another side with respect to the inner frame 220, the first opening 117 provided in any one of the top surface 113, the bottom surface 114, the front surface 115, or the rear surface 116 of the module housing 110 provided in the other unit module 100 may communicate with the second opening 221 of the inner frame 220.

When the unit module 100 is mounted on a side and another side of the inner frame 220 such that the first opening 117 provided in the unit module 100 and the second opening 221 provided in the inner frame 220 communicate with each other, air may move through the first opening 117 of one unit module 100, the second opening 221 of the inner frame 220, and the first opening 117 of another unit module 100.

According to an embodiment of the present disclosure, the module housing 110 of the unit module 100 may include a first support 118 provided with a through hole into which the cartridge 120 is mounted and positioned in a middle portion of the module housing 110.

Referring to FIG. 1, the first support 118 may be a portion that partitions the inner side of the module housing 110, and the first support 118 may divide the inner side of the module housing 110 into two spaces.

The first support 118 may be provided with a through hole through which the cartridge 120 may pass, and the cartridge 120 may extend from the side surface 111 of the module housing 110 through the through hole of the first support 118 to the other side surface 112 of the module housing 110.

According to an embodiment of the present disclosure, the first opening 117 provided in the top surface 113, the bottom surface 114, the front surface 115, and the rear surface 116 of the module housing 110 may be divided with respect to the first support 118.

Specifically, the first opening 117 provided in the top surface 113, the bottom surface 114, the front surface 115, and the rear surface 116 of the module housing 110 may be divided into two spaces by the first support 118.

By dividing the internal space of the module housing 110 and the first opening 117 into two spaces through the first support 118, the internal space of the module housing 110 and the first opening 117 may be divided by a point where exhaust gas enters and a point where the exhaust gas is discharged.

One of the internal space of the module housing 110 and the first opening 117, divided by the first support 118, may serve as a space and a path through which the exhaust gas enters, and the other of the internal space of the module housing 110 and the first opening 117, divided by the first support 118, may be used as a space and a path through which the exhaust gas is discharged.

Referring to FIG. 5, according to an embodiment of the present disclosure, the inner frame 220 provided inside the outer housing 200 may include a second opening 221 and a second support 222.

The second opening 221 may be a portion open to the outside, and the second support 222 may be a portion closed to the outside. The second opening 221 may be divided by the second support 222, and the second opening 221 may be divided into two portions through the second support 222.

The module housing 110 of the unit module 100, which includes the first support 118, may be mounted on a side and the other side with respect to the inner frame 220 including the second opening 221 and the second support 222. The inner frame 220 may be formed with a shape corresponding to the shape of the module housing 110.

When the module housing 110 including the first support 118 is mounted on the side and the other side with respect to the inner frame 220 including the second opening 221 and the second support 222, the first opening 117 provided in any one of the top surface 113, the bottom surface 114, the front surface 115, and the rear surface 116 of the module housing 110 may communicate with the second opening 221 of the inner frame 220.

As the shape of the inner frame 220 corresponds to the shape of the module housing 110, when the unit module 100 is mounted on the outer housing 200, any one of the first openings 117 provided in the unit module 100 may communicate with the second opening 221.

According to an embodiment of the present disclosure, a sealing member 223 may be provided between the unit module 100 and the inner frame 220 of the outer housing 200. According to an embodiment of the present disclosure, the sealing member 223 may be provided between the unit module 100 and the outer housing 200.

When the unit module 100 is mounted on the outer housing 200, exhaust gas and dry air need to move only through the first opening 117 provided in the unit module 100 and the space inside the cartridge 120.

Specifically, when the unit module 100 is mounted on the outer housing 200, no air leakage should occur between the outer side of the unit module 100 and the inner frame 220, and between the outer side of the unit module 100 and the outer housing 200, thereby ensuring smooth moisture exchange between the dry air and the exhaust gas through the humidification membrane of the cartridge 120.

To this end, as shown in FIG. 4, the sealing member 223 may be provided between the outer side of the unit module 100 and the inner frame 220 and between the outer side of the unit module 100 and the outer housing 200.

According to an embodiment of the present disclosure, the plurality of unit modules 100 may be inserted into the outer housing 200 while sliding along the inner frame 220, and the plurality of unit modules 100 may be fixed to the outer housing 200 through bolt assembly, snap fit assembly, socket assembly, etc.

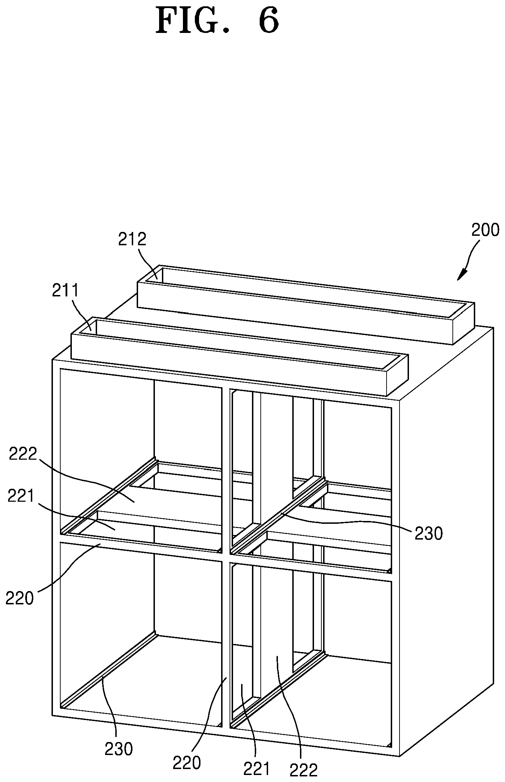

Referring to FIG. 6, the outer housing 200 or the inner frame 220 may be provided with a sliding rail 230 for moving the unit module 100. The sliding rail 230 may be provided on the outer housing 200 or the inner frame 220, and the unit module 100 may be inserted into the inner side of the outer housing 200 along the sliding rail 230.

By providing the sliding rail 230 on the outer housing 200 or the inner frame 220 as described above, the unit module 100 may be easily mounted inside the outer housing 200. By providing the sliding rail 230 on the outer housing 200 or the inner frame 220, the unit module 100 may be easily separated from the inner side of the outer housing 200.

The fuel cell humidifier 10 with the replaceable unit module according to an embodiment of the present disclosure may be manufactured using the unit module 100 that is previously modularized by bundling the plurality of the cartridges 120.

The fuel cell humidifier 10 with the replaceable unit module according to an embodiment of the present disclosure may be manufactured by assembling and mounting the plurality of modularized unit modules 100 on the outer housing 200, thereby facilitating the manufacturing thereof.

The fuel cell humidifier 10 with the replaceable unit module according to an embodiment of the present disclosure may be manufactured by assembling the plurality of modularized unit modules 100 on the outer housing 200, thereby facilitating modulebased packaging.

The fuel cell humidifier 10 with the replaceable unit module according to an embodiment of the present disclosure may allow the cartridge 120 to be replaced for each unit module 100, thereby replacing and using all or some of the cartridges 120 provided in the fuel cell humidifier 10.

Furthermore, the fuel cell humidifier 10 with the replaceable unit module according to an embodiment of the present disclosure may be partially repaired by replacing only the unit module 100 where the humidification membrane of the cartridge 120 is damaged, among the plurality of unit modules 100.

The fuel cell humidifier including a replaceable unit module according to an embodiment of the present disclosure described above may have effects as described below.

In the fuel cell humidifier with a replaceable unit module according to an embodiment of the present disclosure, a unit module including a plurality of cartridges is manufactured and a plurality of unit modules are assembled to an outer housing to manufacture the fuel cell humidifier, facilitating cartridge replacement.

In the fuel cell humidifier with a replaceable unit module according to an embodiment of the present disclosure, unit modules may be replaced during the use of the fuel cell humidifier, which allows all or some of cartridges to be replaced and used.

In the fuel cell humidifier with a replaceable unit module according to an embodiment of the present disclosure, a unit module including a plurality of cartridges is manufactured and a plurality of unit modules are assembled to an outer housing to manufacture the fuel cell humidifier, thereby manufacturing a large-volume fuel cell humidifier.

In the fuel cell humidifier with a replaceable unit module according to an embodiment of the present disclosure, a unit module including a plurality of cartridges is manufactured and a plurality of unit modules are assembled to an outer housing to manufacture the fuel cell humidifier, facilitating the manufacturing of the fuel cell humidifier.

Although the present disclosure has been described with reference to one embodiment shown in the drawings, it will be understood by those of ordinary skill in the art that various modifications and changes of embodiments may be made therein without departing from the spirit and scope of the present disclosure. Accordingly, the true technical scope of the present disclosure should be defined by the technical spirit of the appended claims.

## Claims

1. A humidifier for a fuel cell with a replaceable unit module, the humidifier comprising:
a unit module comprising a module housing in a hexahedral shape and a cartridge mounted on the module housing, the module housing having a first opening in each of a top surface, a bottom surface, a front surface, and a rear surface and the cartridge comprising a humidification membrane therein; and
an outer housing mounted to enable one or more unit modules to be assembled therein.

2. The humidifier of claim 1, wherein any one of first openings in one unit module mounted on the outer housing communicates with any one of first openings in another unit module.

3. The humidifier of claim 1, wherein the outer housing comprises an exhaust gas inlet through which exhaust gas discharged from a fuel cell stack enters and an exhaust gas outlet through which the exhaust gas is discharged.

4. The humidifier of claim 1, wherein the outer housing comprises an inner frame that partitions an internal space of the outer housing.

5. The humidifier of claim 4, wherein the inner frame comprises a second opening open to outside, and
when the unit module is mounted on the outer housing, any one of first openings in the unit module communicates with the second opening.

6. The humidifier of claim 4, wherein the module housing of the unit module comprises a first support which is provided with a through hole in which the cartridge is mounted and which is installed in a middle portion of the module housing, and
the first opening provided in each of a top surface, a bottom surface, a front surface, and a rear surface of the module housing is divided based on the first support.

7. The humidifier of claim 6, wherein the inner frame comprises a second opening open to outside and a second support closed to the outside, and
the second opening in the inner frame is divided based on the second support.

8. The humidifier of claim 7, wherein when the unit module is mounted on the outer housing, any one of first openings in the unit module communicates with the second opening.

9. The humidifier of claim 4, wherein a sealing member is provided between the unit module and the inner frame of the outer housing.

10. The humidifier of claim 1, wherein a sealing member is provided between the unit module and the outer housing.

11. The humidifier of claim 1, wherein when the cartridge in a pillar shape is fixed to a side surface and another side surface of the module housing, a sealing member is provided between the cartridge and the module housing.
